# EUROPEAN PATENT SPECIFICATION

(11) **EP 3 168 026 B1**
(45) Date of publication and mention of the grant of the patent: **19.09.2018**
(21) Application number: 16197105.6
(22) Date of filing: 03.11.2016
(51) Int. Cl.: B29C 45/17, B66C 13/08

(54) **INJECTION MOLDING MACHINE**
SPRITZGIESSMASCHINE
MACHINE DE MOULAGE À INJECTION

(30) Priority: 10.11.2015 JP 2015220524
(43) Date of publication of application: 17.05.2017
(73) Proprietor: SUMITOMO HEAVY INDUSTRIES, LTD., Tokyo 141-6025 (JP)
(72) Inventor: ISHII, Yoshihisa, Chiba-shi, Chiba 263-0001 (JP)
(74) Representative: Louis Pöhlau Lohrentz

(56) References cited:
- EP-A1- 2 423 146
- DE-A1-102005 030 969
- JP-A- H11 170 297
- US-A1- 2015 228 366

## Description

### BACKGROUND OF THE INVENTION

### Field of the Invention

Certain embodiments of the present invention relates to an injection molding machine.

### Description of Related Art

United States Patent Application US 2015/0228366 discloses a shipping container containing an unirradiated nuclear fuel assembly that is lifted off the ground by operating a crane to raise a lifting tool comprising a winch.

In a vertical type injection molding machine disclosed in Japanese Unexamined Patent Application Publication No. 11-170297, in order to decrease the height of the injection molding machine when the injection molding machine is conveyed, a guide rod which vertically guides an injection unit is divided and the divided guide rods are configured to be attached to and detached from each other. In a state where the injection unit is lowered to the lowermost position, a portion of the guide rod protruding upward from the injection unit is separated, and the height of the vertical type injection molding machine is decreased.

In addition, by changing the direction of the vertical type injection molding machine and changing the state of the vertical type injection molding machine from an erected state to a laid state, the height of the vertical type injection molding machine is decreased. In this case, division of the guide rod is not required.

In the related art, when the direction of the injection molding machine is changed, multiple hoisters such as a crane hoisting the injection molding machine are used. However, any one of the multiple hoisters is required to have a large lifting load.

### SUMMARY OF THE INVENTION

The present invention is made in consideration of the above-described circumstances, and a main object thereof is to provide an injection molding machine in which some hoister having a small lifting load can be used.

In order to achieve the above-described object, according to an aspect of the present invention, there is provided an injection molding machine, including: a first attachment portion to which a first adaptor hoisted by a first hoisting tool is attached; and a second attachment portion to which a second adaptor hoisted by a second hoisting tool is attached, in which while a direction of the injection molding machine is changed by hoisting the injection molding machine using the first hoisting tool and the second hoisting tool and lifting and lowering the first hoisting tool and the second hoisting tool relative to each other, a horizontal distance between a connection portion of the first adaptor to connect the first hoisting tool, and the center of gravity of the injection molding machine is larger than a horizontal distance between a connection portion of the second adaptor to connect the second hoisting tool, and the center of gravity of the injection molding machine.

According to the aspect of the present invention, an injection molding machine in which some hoisters having a small lifting load can be used is provided.

### BRIEF DESCRIPTION OF THE DRAWINGS

Fig. 1 is a side view showing a state when mold opening of an injection molding machine according to an embodiment is completed.
Fig. 2 is a side view showing a state when a mold of the injection molding machine according to the embodiment is clamped.
Fig. 3 is a front view showing a state when the mold of the injection molding machine according to the embodiment is clamped.
Fig. 4 is a side view showing a state where the injection molding machine according to the embodiment is erected when the injection molding machine is hoisted.
Fig. 5 is a front view showing a state where the injection molding machine according to the embodiment is erected when the injection molding machine is hoisted.
Fig. 6 is a side view showing a state where the injection molding machine according to the embodiment is laid when the injection molding machine is hoisted.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

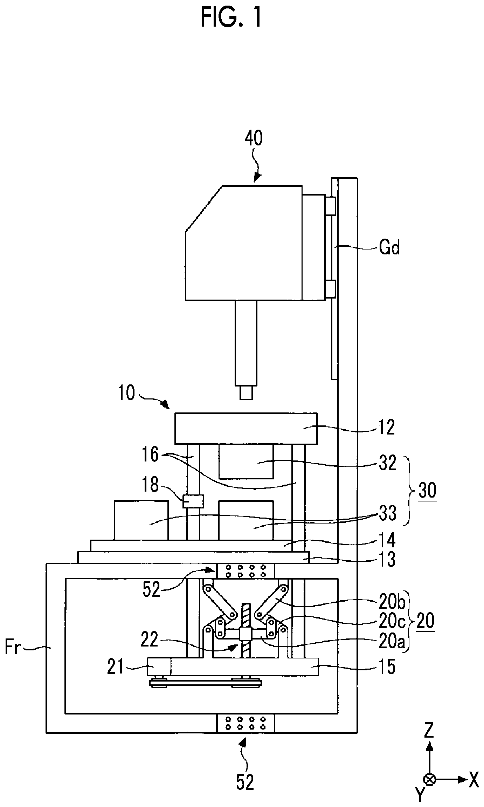

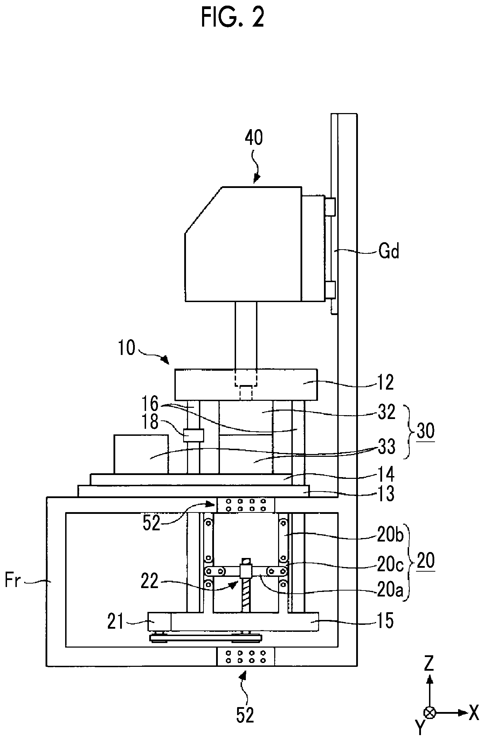

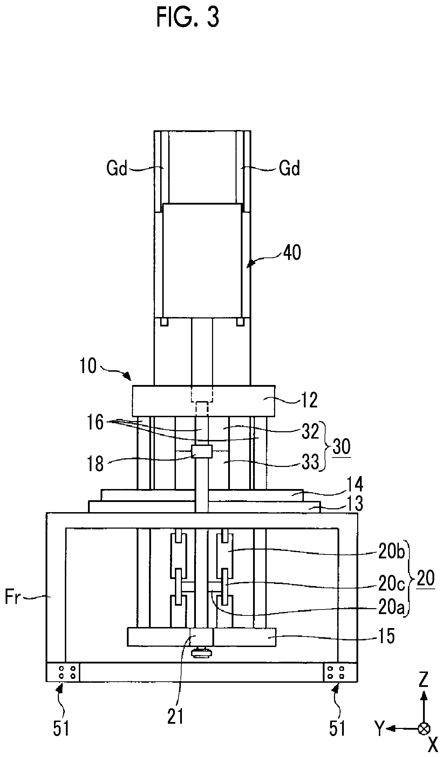

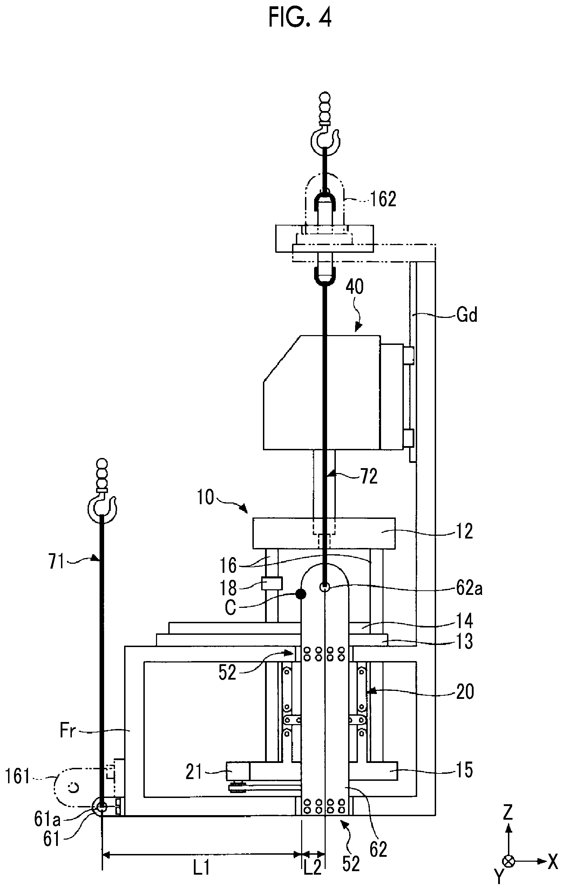

Fig. 1 is a side view showing a state when mold opening of an injection molding machine according to an embodiment is completed. Fig. 2 is a side view showing a state when a mold of the injection molding machine according to the embodiment is clamped. Fig. 3 is a front view showing a state when the mold of the injection molding machine according to the embodiment is clamped. In Figs. 1 to 3, an X direction, a Y direction, and a Z direction are directions which are perpendicular to each other. The X direction and the Y direction are horizontal directions and the Z direction is a vertical direction. This is similarly applied to Figs. 4 to 6. As shown in Figs. 1 to 3, the injection molding machine includes a mold clamping unit 10 and an injection unit 40.

The mold clamping unit 10 performs mold-closing, mold-clamping, and mold-opening of a mold unit 30. For example, the mold unit 30 includes an upper mold 32 and a lower mold 33. The mold clamping unit 10 includes an upper platen 12, a lower platen 13, a rotary table 14, a toggle support 15, a tie bar 16, a toggle mechanism 20, a mold clamping motor 21, and a movement conversion mechanism 22.

The upper platen 12 can be freely lifted and lowered above the lower platen 13. The upper mold 32 is attached to a surface (lower surface) of the upper platen 12 facing the lower platen 13.

The lower platen 13 is disposed below the upper platen 12 and is fixed to a frame Fr. The multiple lower molds 33 are attached to a surface (upper surface) of the lower platen 13 facing the upper platen 12 via the rotary table 14.

The rotary table 14 rotates by 180°, and moves between a position at which the lower mold 33 faces the upper mold 32 and a position at which a molding product is extracted. The position at which the molding product is extracted may be a preparation position at which an insert member is set to the lower mold 33.

In addition, the lower mold 33 of the present embodiment is attached to the lower platen 13 via the rotary table 14. However, the lower mold 33 may be directly attached to the lower platen 13. In addition, the number of the lower molds 33 is not limited to two, and may be one, or three or more.

The toggle support 15 can be freely lifted and lowered below the lower platen 13, and is connected to the upper platen 12. The upper platen 12 is lifted and lowered according to the lifting and lowering of the toggle support 15.

The tie bar 16 penetrates the lower platen 13, and connects the upper platen 12 and the toggle support 15. Multiple tie bars 16 may be used. Respective tie bars 16 are parallel to each other in a mold opening-closing direction, and extend according to a mold clamping force.

A mold clamping force detector 18 is provided on at least one tie bar 16. The mold clamping force detector 18 may be a strain gauge type detector, and detects the mold clamping force by detecting of strain of the tie bar 16.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16. In addition, the mold clamping force detector 18 may not be provided.

The toggle mechanism 20 is provided between the lower platen 13 and the toggle support 15, and lifts and lowers the toggle support 15 with respect to the lower platen 13. The toggle mechanism 20 includes a crosshead 20a, multiple links 20b and 20c, or the like. One link 20b is attached so as to be freely oscillated to the lower platen 13, and the other link 20c is attached so as to be freely oscillated to the toggle support 15. The links 20b and 20c are bendably/strechably connected by pins or the like.

The mold clamping motor 21 operates the toggle mechanism 20. The mold clamping motor 21 lifts and lowers the crosshead 20a so as to bend and stretch the multiple links 20b and 20c. Accordingly, the toggle support 15 and the upper platen 12 are lifted and lowered. The movement conversion mechanism 22 which converts rotational motion of the mold clamping motor 21 to linear motion of the crosshead 20a is provided between the mold clamping motor 21 and the crosshead 20a. For example, the movement conversion mechanism 22 is configured of a ball-screw mechanism or the like.

The operation of the mold clamping unit 10 is controlled by a controller. The controller is configured of a computer or the like. The controller controls a mold closing process, a mold clamping process, and a mold opening process.

In the mold closing process, by driving the mold clamping motor 21 and lowering the upper platen 12, the upper mold 32 comes into contact with the lower mold 33.

In the mold clamping process, a mold clamping force is generated by further driving the mold clamping motor 21. When the mold is clamped, a cavity space is formed between the upper mold 32 and the lower mold 33, and the cavity space is filled with a liquid molding material. The molding material filling the cavity space is solidified to obtain a molding product.

In the mold opening process, the upper mold 32 is separated from the lower mold 33 by driving the mold clamping motor 21 and lifting the upper platen 12.

The injection unit 40 is freely lifted and lowered along a guide Gd which is formed on the a frame Fr. The injection unit 40 is touched to the mold unit 30, and the inside of the mold unit 30 is filled with a molding material. Similarly to the operation of the mold clamping unit 10, the operation of the injection unit 40 is controlled by the controller.

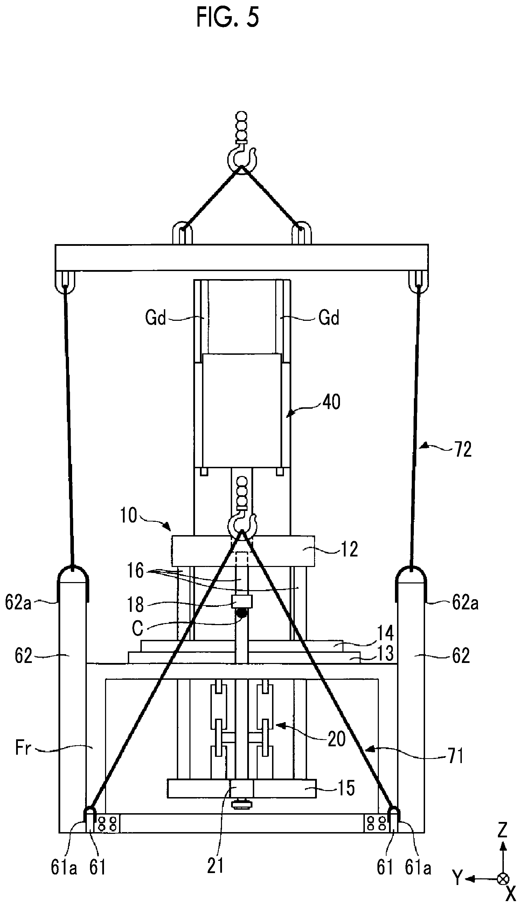

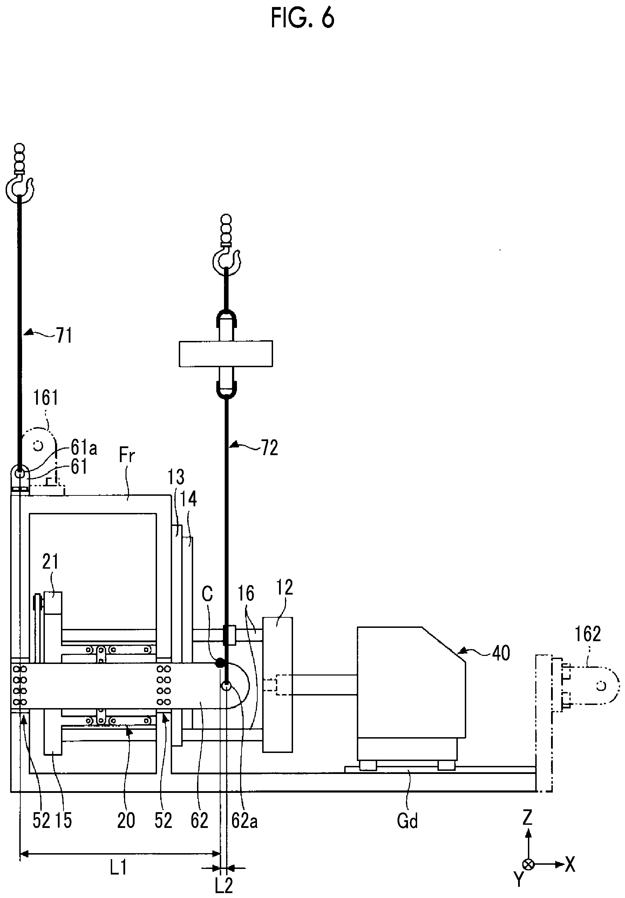

Fig. 4 is a side view showing a state where the injection molding machine according to the embodiment is erected when the injection molding machine is hoisted. Fig. 5 is a front view showing a state where the injection molding machine according to the embodiment is erected when the injection molding machine is hoisted. Fig. 6 is a side view showing a state where the injection molding machine according to the embodiment is laid when the injection molding machine is hoisted. In Figs. 4 and 6, for comparison, an attachment position of a first adaptor 161 in the related art and an attachment position of a second adaptor 162 in the related art are shown by two-dotted lines.

The injection molding machine is hoisted when the direction of the injection molding machine is changed between the erected state shown in Fig. 4 and the laid state shown in Fig. 6. For example, the change of the direction of the injection molding machine is performed in order to remove height limitation when the injection molding machine is transferred to a truck, a ship, or the like. During the transfer of the injection molding machine, the injection molding machine is laid, and before the transfer and after the transfer, the injection molding machine is erected. In order to change the direction, the injection molding machine includes first attachment portions 51 (refer to Fig. 3) and second attachment portions 52 (refer to Figs. 1 and 2).

First adaptors 61 are attached to the first attachment portions 51. For example, in order to attach the first adaptors 61, bolts are used, and blot holes to which the bolts are screwed are provided in the first attachment portions 51. In addition, the attachment tool is not limited to the bolt.

As shown in Fig. 3, the first attachment portions 51 may be provided symmetrically bilaterally. The first adaptor 61 is attached to each of right and left first attachment portions 51. In Fig. 3, the first attachment portions 51 are provided on the frame Fr. However, the first attachment portions 51 may be provided on the mold clamping unit 10, the injection unit 40, or the like.

Each of the first adaptors 61 connects the first attachment portion 51 and a first hoisting tool 71 to each other. After the first adaptor 61 is attached to the first attachment portion 51, the first adaptor 61 is hoisted by the first hoisting tool 71. A connection portion 61a of the first adaptor 61 to connect the first hoisting tool 71 is provided in the vicinity of the first attachment portion 51. However, the connection portion 61a may be provided at a location away from the first attachment portion 51.

As shown in Fig. 5, the first adaptors 61 may be provided symmetrically bilaterally. The right first adaptor 61 and the left first adaptor 61 are collected by the first hoisting tool 71 and are hoisted. The first hoisting tool 71 is hooked to a hook of the first hoister or the like. After the injection molding machine is transferred, the first adaptors 61 may be removed from the first attachment portions 51.

Second adaptors 62 are attached to the second attachment portions 52. For example, in order to attach the second adaptors 62, bolts are used, and blot holes to which the bolts are screwed are provided in the second attachment portions 52. In addition, the attachment tool is not limited to the bolt.

Similarly to the first attachment portions 51, the second attachment portions 52 may be provided symmetrically bilaterally. The second adaptor 62 is attached to each of right and left second attachment portions 52. In Fig. 1 or 2, the second attachment portions 52 are provided on the frame Fr. However, the second attachment portions 52 may be provided on the mold clamping unit 10, the injection unit 40, or the like.

Each of the second adaptors 62 connects the second attachment portion 52 and a second hoisting tool 72 to each other. After the second adaptor 62 is attached to the second attachment portion 52, the second adaptor 62 is hoisted by the second hoisting tool 72. A connection portion 62a of the second adaptor 62 to connect the second hoisting tool 72 is provided in the vicinity of the second attachment portion 52. However, the connection portion 62a may be provided at a location away from the second attachment portion 52.

As shown in Fig. 5, the second adaptors 62 may be provided symmetrically bilaterally. The right second adaptor 62 and the left second adaptor 62 are collected by the second hoisting tool 72 and are hoisted. The second hoisting tool 72 is hooked to a hook of the second hoister or the like. After the injection molding machine is transferred, the second adaptors 62 may be removed from the second attachment portions 52.

The injection molding machine is hoisted by the first hoisting tool 71 and the second hoisting tool 72, and the first hoister and the second hoister lift and lower the first hoisting tool 71 and the second hoisting tool 72 relative to each other. Accordingly, the direction of the injection molding machine is changed. The direction of the injection molding machine is changed between the erected state shown in Figs. 4 and 5 and the laid state shown in Fig. 6. When the injection molding machine is laid, the guide Gd of the injection unit 40 is horizontal, and if the injection unit 40 is placed on the guide Gd, stability is improved.

When the direction of the injection molding machine is changed, the injection molding machine is not rotated with an axis parallel in the X direction as a center. When viewed in the X direction, in the case where the state of the injection molding machine is the erected state and the case where the state of the injection molding machine is the laid state, the center line of the injection molding machine, the center line of the first hoisting tool 71, and the center line of the second hoisting tool 72 pass through the center of gravity of the injection molding machine (refer to Fig. 5). This positional relationship is maintained while the direction of the injection molding machine is changed.

Meanwhile, when the direction of the injection molding machine is changed, the injection molding machine is rotated with an axis parallel in the Y direction as a center. When viewed in the Y direction, in the case where the state of the injection molding machine is the erected state and the case where the state of the injection molding machine is the laid state, a first X direction distance L1 is larger than a second X direction distance L2 (refer to Figs. 4 and 6). This magnitude relationship is maintained while the direction of the injection molding machine is changed.

Here, the first X direction distance L1 is an X direction distance between the connection portion 61a of the first adaptor 61 to connect the first hoisting tool 71, and the center of gravity C of the injection molding machine. The second X direction distance L2 is an X direction distance between the connection portion 62a of the second adaptor 62 to connect the second hoisting tool 72, and the center of gravity C of the injection molding machine. The X direction distances are horizontal distances.

Meanwhile, in a case where the first adaptor 161 of the related art and the second adaptor 162 of the related art are attached to the injection molding machine, when viewed in the Y direction, in the case where the state of the injection molding machine is the erected state and in the case where the state of the injection molding machine is the laid state, the magnitude relationship between the first X direction distance L1 and the second X direction distance L2 is reversed to that of the present embodiment (refer to Figs. 4 and 6).

According to the present embodiment, while the direction of the injection molding machine is changed, the magnitude relationship between the first X direction distance L1 and the second X direction distance L2 is maintained, and the state where the first X direction distance L1 is larger than the second X direction distance L2 is maintained. Accordingly, as is obvious from balance of moment, a load which is smaller than a load applied to the second hoister is continuously applied to the first hoister. Accordingly, a hoister having a smaller lifting load than that of the second hoister can be used in the first hoister, and hoisters having a large lifting load are not needed to be used in both the first hoister and the second hoister. In addition, the second X direction distance L2 may be smaller than the first X direction distance L1 and may be zero.

In addition, in the present embodiment, when the direction of the injection molding machine is changed, the injection molding machine is rotated with the axis parallel in the Y direction as a center. However, the rotation axis is not particularly limited. For example, the injection molding machine may be rotated with the axis parallel in the X direction as a center. When viewed in the rotation axis direction, a state may be maintained, in which the horizontal distance between the connection portion 61a of the first adaptor 61 to connect the first hoisting tool 71, and the center of gravity C of the injection molding machine is larger than the horizontal distance between the connection portion 62a of the second adaptor 62 to connect the second hoisting tool 72, and the center of gravity C of the injection molding machine.

According to the present embodiment, while the direction of the injection molding machine is changed, the load which is smaller than the load applied to the second adaptor 62 is continuously applied to the first adaptor 61. Accordingly, an adaptor having smaller load resistance than that of the second adaptor 62 can be used as the first adaptor 61. Therefore, adaptors having large load resistance are not needed to be used in both the first adaptor 61 and the second adaptor 62, and component costs can be reduced. For example, the load resistance is obtained from a breaking load by tension test.

Hereinbefore, the embodiment of the injection molding machine is described. However, the present invention is not limited to the above-described embodiment, or the like. Various modifications and improvement may be applied to the present invention within the scope which does not depart from the gist of the present invention described in claims.

For example, the mold clamping unit 10 of the embodiment is a vertical type mold clamping unit in which the mold opening-closing direction is the vertical direction. However, the mold clamping unit 10 may be a horizontal type mold clamping unit in which the mold opening-closing direction is the horizontal direction. For example, the horizontal type mold clamping unit includes a stationary platen, a movable platen, a toggle support, a toggle mechanism, tie bars, a mold clamping motor, or the like. A stationary mold is attached to the stationary platen, and a movable mold is attached to the movable platen. A mold unit is configured of the stationary mold and the movable mold. The toggle support is disposed on the side opposite to the stationary platen based on the movable platen. The tie bars are parallel to each other in the horizontal direction, and connect the stationary platen and the toggle support. The toggle mechanism is disposed between the movable platen and the toggle support, and moves the movable platen with respect to the toggle support. The movement conversion mechanism which converts the rotational motion of the mold clamping motor to the linear motion of the crosshead is disposed between the crosshead of the toggle mechanism and the mold clamping motor.

In the injection molding machine of the above-described embodiment, while the direction of the injection molding machine is changed, the injection molding machine is hoisted by two hoisters. However, the injection molding machine may be hoisted by three or more hoisters, and other attachment portions may be provided in addition to the first attachment portion 51 or the second attachment portion 52. Any modification may be applied to the present invention as long as the magnitude relationship between the first X direction distance L1 and the second X direction distance L2 is maintained, and the state where the first X direction distance L1 is larger than the second X direction distance L2 is maintained while the direction of the injection molding machine is changed.

### Brief Description of the Reference Symbols

- 10:: mold clamping unit
- 12:: upper platen
- 13:: lower platen
- 15:: toggle support
- 16:: tie bar
- 20:: toggle mechanism
- 21:: mold clamping motor
- 22:: movement conversion mechanism
- 30:: mold unit
- 32:: upper mold
- 33:: lower mold
- 40:: injection unit
- 51:: first attachment portion
- 52:: second attachment portion
- 61:: first adaptor
- 61a:: connection portion
- 62:: second adaptor
- 62a:: connection portion
- 71:: first hoisting tool
- 72:: second hoisting tool

## Claims

1. An injection molding machine, comprising:
a first attachment portion (51) to which a first adaptor (61) hoisted by a first hoisting tool (71) is attached; and
a second attachment portion (52) to which a second adaptor (62) hoisted by a second hoisting tool (72) is attached,
wherein while a direction of the injection molding machine is changed by hoisting the injection molding machine using the first hoisting tool (71) and the second hoisting tool (72) and lifting and lowering the first hoisting tool (71) and the second hoisting tool (72) relative to each other, a horizontal distance (L1) between a connection portion of the first adaptor (61) to connect the first hoisting tool (71), and the center of gravity (C) of the injection molding machine is larger than a horizontal distance (L2) between a connection portion of the second adaptor (62) to connect the second hoisting tool (72), and the center of gravity (C) of the injection molding machine.

2. The injection molding machine according to claim 1,
wherein the first adaptor (61) has load resistance which is smaller than load resistance of the second adaptor (62).

## Patentansprüche

1. Spritzgießmaschine, umfassend:
einen ersten Anbringungsabschnitt (51), an dem ein erstes Passstück (61), das durch ein erstes Windenwerkzeug (71) hochgezogen wird, angebracht ist; und
einen zweiten Anbringungsabschnitt (52), an dem ein zweites Passstück (62), das durch ein zweites Windenwerkzeug (72) hochgezogen wird, angebracht ist,
wobei, während durch Hochziehen der Spritzgießmaschine unter Benutzung des ersten Windenwerkzeugs (71) und des zweiten Windenwerkzeugs (72) und Anheben und Absenken des ersten Windenwerkzeugs (71) und des zweiten Windenwerkzeugs (72) in Bezug zueinander eine Richtung der Spritzgießmaschine geändert wird, ein horizontaler Abstand (L1) zwischen einem Verbindungspunkt des ersten Passstücks (61) zum Verbinden des ersten Windenwerkzeugs (71) und dem Schwerpunkt (C) der Spritzgießmaschine größer als ein horizontaler Abstand (L2) zwischen einem Verbindungspunkt des zweiten Passstücks (62) zum Verbinden des zweiten Windenwerkzeugs (72) und dem Schwerpunkt (C) der Spritzgießmaschine ist.

2. Spritzgießmaschine nach Anspruch 1,
wobei das erste Passstück (61) einen Lastwiderstand aufweist, der kleiner als der Lastwiderstand des zweiten Passstücks (62) ist.

## Revendications

1. Machine de moulage par injection comprenant :
une première partie de fixation (51) à laquelle un premier adaptateur (61) levé par un premier outil de levage (71) est fixé ; et
une seconde partie de fixation (52) à laquelle un second adaptateur (62) levé par un second outil de levage (72) est fixé,
dans laquelle, alors qu'une direction de la machine de moulage par injection est modifiée en levant la machine de moulage par injection à l'aide du premier outil de levage (71) et du second outil de levage (72) et en levant et en abaissant le premier outil de levage (71) et le second outil de levage (72) l'un par rapport à la l'autre, une distance horizontale (L1) entre une partie de raccordement du premier adaptateur (61) pour raccorder le premier outil de levage (71) et le centre de gravité (C) de la machine de moulage par injection est supérieure à une distance horizontale (L2) entre une partie de raccordement du second adaptateur (62) pour raccorder le second outil de levage (72) et le centre de gravité (C) de la machine de moulage par injection.

2. Machine de moulage par injection selon la revendication 1,
dans laquelle le premier adaptateur (61) a une résistance de charge qui est inférieure à la résistance de charge du second adaptateur (62).
